# EUROPEAN PATENT SPECIFICATION

(11) **EP 2 459 419 B1**
(45) Date of publication and mention of the grant of the patent: **04.09.2013**
(21) Application number: 10755255.6
(22) Date of filing: 28.07.2010
(51) Int. Cl.: B60R 25/06, B60R 25/00, F16H 61/22

(54) **GEAR LEVER LOCKING DEVICE**
VERRIEGELUNGSVORRICHTUNG FÜR EINEN SCHALTHEBEL EINES KRAFTFAHRZEUGGETRIEBES
DISPOSITIF DE BLOCAGE DE LEVIER DE VITESSES

(30) Priority: 31.07.2009 TH 481509; 04.12.2009 TH 140709
(43) Date of publication of application: 06.06.2012
(73) Proprietor: Kantajaraniti, Kamol, Bangkok 10220 (TH); Petcharapirat, Suwat, Prachuapkhirikhan 77120 (TH)
(72) Inventor: KANTAJARANITI,Kamol, Tarang, Bangkhane Bangkok 10220 (TH)
(74) Representative: Forsthuber, Martin
(86) International application number: PCT/TH2010/000024
(87) International publication number: WO 2011/025464

(56) References cited:
- EP-A1- 0 641 692
- WO-A1-94/04397
- DE-A1- 4 116 884
- DE-C1- 3 705 317
- US-A- 1 895 404

## Description

### BACKGROUND OF THE INVENTION

To combat the problem of vehicle theft, many different types of vehicle anti-theft devices have been developed. Such anti-theft devices include electric anti-theft alarm device units or mechanical devices e.g., a steering wheel locking device or a brake pedal/clutch locking device. However, conventional mechanical anti-theft devices have various drawbacks, such as, the need to install such devices permanently to a steering column thereby causing a potential blockage or hindrance to a user of the vehicle controls when driving. Such issues can potentially contribute to unexpected accidents. Additionally, permanently attaching such mechanical devices to a steering column gives an inferior appearance, as such devices are visible from outside the vehicle.

Removable mechanical anti-theft devices are also problematic. When such devices are unused, they must be keep in an area of the vehicle that does not obstruct a driver's movement. As a result, such removable anti-theft devices are inconvenient to store and use.

Another conventional mechanical anti-theft device is a gear lever locking device. Conventional gear lever locking devices are attached to the structure of a vehicle and include a loop member for use in locking the gear lever locking device only in one particular position according to an installation position. Such gear lever locking devices may be unlocked by an unlocking key system. However, conventional gear lever locking devices have an operational drawback. That is, such devices are installed outside the gear lever covering panel, thereby deteriorating the outer appearance of the gear lever and exposing the device to more easily become damaged, and inhibiting sufficient convenience during usage. Furthermore, the gear lever locking device is required to be permanently installed alongside the gear lever. Sometimes, the installation in this manner can make a user feel that the locking device members obstruct the steering of the vehicle and possibly lead to an unexpected accident while driving. If the device is a detachable type after being unlocked, then the detached member has to be placed in a proper place so that it will not interfere with the driver which is very inconvenient. German Patent Application Publication No. DE 41 16 884 A1 discloses another conventional gearshift lock for a vehicle according to the preamble of claim 1 and of claim 11. The gearshift lock includes a flat metal strip bolt attached to a gear lever at one end and a toughened housing at the opposite end. The flat metal strip bolt is locked in position by a locking mechanism having a locking catch that engages holes along the flat metal strip bolt.

Thus, there is still a need for a vehicle gear lever locking device capable of locking a gear lever that addresses the aforementioned problems of conventional mechanical anti-theft devices. Such a need is satisfied by the vehicle gear lever locking device according to the claims 1 and 11 of the present application.

### BRIEF SUMMARY OF THE INVENTION

The present invention provides a gear lever locking device to be used with a manual or automatic transmission system of a vehicle, which will be installed inside a gear lever cover panel. The gear lever locking device comprises a gear lever transverse member. The gear lever transverse member is formed into a rectangular frame of which one side is engaged with a sliding mechanism arranged inside the frame provided with a movement controlling rail in the forward and backward directions. The two ends of the other side of the gear lever transverse member are coupled with a sliding axle pipe connected to a mounting axle installed inside the frame rail. The frame rail controls the movement on one side of the frame body having a locking mechanism for use in locking a movement of the gear lever transverse member. Any sliding movement during the normal usage is inhibited while the gear lever transverse member is in the locked state. The gear lever locking device is fastened to a plurality of fixing legs at the lower part of the frame body in order to be installed to a position of the original screws of the vehicle. The upper part of the fixing legs are provided with screw guards, which are fastened to the fixing legs. The configuration of the screw guards corresponds to that of the fixing legs superposed on the upper part of the fixing legs and are fastened together by studs and screws in the position that is identical with that of the gear lever locking device, while the latter is slid to obstruct the position of the screw guard while the gear lever locking device is in the locked position. The above operation is carried out by the gear lever locking device for use with the manual transmission gear lever locking device, as disclosed in the following detailed description of the invention.

The present invention also provides a gear lever locking device featuring a frame with a gear lever transverse mechanism to be installed with a gear lever in a position inside a gear lever cover panel and mounted to a vehicle via fixing legs. The gear lever transverse mechanism includes a lateral edge vertically slidable in accordance with the gear lever. The mechanism can be fixedly locked by an immobility stud mechanism installed at a lateral side of the immobility stud mechanism. Locking is done by pressing a locking mechanism to move its end into designated stud holes on the lateral edge of the locking mechanism body in a position related to the locking stud used in locking to the lateral edge of the gear lever transverse mechanism. The locking mechanism may be unlocked by a key.

In accordance with a first preferred embodiment, the present invention provides a gear lever locking device. The gear lever locking device is characterized by a frame body comprising side mounting members, and front and rear side mounting members. The frame body is a rectangular frame used in defining the movement limit of the gear lever transverse mechanism having the front side mounting member as the front member, the rear side mounting member, and lateral edges. Inside the frame body, there is a gear lever transverse mechanism cut from a metal sheet having rectangular side mounting members. The front and rear edges of the gear lever transverse mechanism include a pair of rods used for reinforcement. The lateral edge of the gear lever transverse mechanism is movable in the forward and backward directions inside the lateral edge of the frame body. The lateral edge of the side mounting member of the frame body has a key for unlocking the gear lever locking device.

A locking mechanism is installed inside a locking mechanism body. The locking mechanism includes a locking stud having a number of locking stud ends extending through an opening on the wall of the side mounting member of the frame body and a shaft shell, to be locked to a stud groove on a shaft axle in a position defined as the locked position to lock the gear lever transverse mechanism in a stationary position. The abovementioned shaft shell is fixed to the lateral side of the gear lever transverse mechanism and movable on the shaft axle. In the locked position, a number of lateral members of the frame body are shaped to be attached to the positions of the original screws of the vehicle. In addition, on the fixing legs, there are screw guards shaped into a configuration that matches that of the fixing legs, to prevent the removal of fastening screws for the fixing legs for further safety.

The gear lever locking device is characterized by a rectangular frame body having the front and rear side mounting members, and side mounting members. The gear lever transverse mechanism is arranged inside the frame body. The side mounting members are in the shape of the letter "C". An opening of each lateral groove is in a position inward to the frame body used in supporting a number of sustaining wheels attached to the lateral edge of the gear lever transverse mechanism. In the position that the side mounting member is coupled. to the locking mechanism, there are a number of the stud holes to be inserted through the locking pin on the locking stud designated in the locked position.

The gear lever transverse mechanism cut from a metal sheet includes a rectangular mounting edge. The front and rear edges of the gear lever transverse mechanism each include a rod used for reinforcement. The lateral edge of the gear lever transverse mechanism is movable in the forward and backward directions inside the lateral edges of the frame body. The sustaining wheels are attached to the lateral edge of the gear lever transverse mechanism by an attaching means. The side mounting member of the gear lever transverse mechanism is installed with the locking mechanism fixed to the shaft shell mounted to the shaft axle installed inside the side mounting member of the frame body. On the shaft shell, there are locking pin openings in the corresponding number with that of the locking studs designated in the locked position aligned with the groove on the shaft axle designated in the locked positioned to lock the gear lever transverse mechanism into the stationary position.

The side mounting member of the frame body having a key used in unlocking by means of the locking mechanism is characterized by a locking mechanism cylinder having the stud hole on the wall in the safe position used in supporting the stud end in the locked position. On the stud hole, there is a cover plate used as additional layer in covering the stud end. Inside the locking mechanism cylinder, there is a return spring, a locking stud, a stud chamber having a stud with the end pushing spring serially arranged from the rear end of the turning mechanism, respectively. These components are movable inside the locking mechanism cylinder with the force exerted from the return spring or the pushing force from the outer end of the turning mechanism. The turning mechanism chamber also includes the turning mechanism arranged inside and the end of the turning mechanism, which is coupled to a cam axle connected to the upper notch on the end portion of the stud to drive the stud for the unlocking.

The lateral part of the frame body includes a number of fixing legs formed into the shape that can be attached to the positions of the original screws of the vehicle. In addition, on the fixing legs, there are screw guards shaped into the configuration that matches that of respective fixing legs for the prevention of the removal of the fixing leg fastening screw for further safety. The screw guards are attached to the upper part of the fixing legs via a number of studs. The ends of the screw guards are connected to the frame body via a number of the studs in the position that the gear lever transverse mechanism slides to cover the studs while in the locked position.

In accordance with a second preferred embodiment, the present invention provides a gear lever locking device characterized by a frame body and a gear lever transverse mechanism that is different from the first preferred embodiment. That is, the frame body comprises edges as front and rear edges, and a side mounting member or lateral edge. The gear lever transverse mechanism is installed inside the frame body. The frame body includes the edge for use in fastening lateral edge and another lateral edge on the opposite side together. The lateral edge is a rail edge that is shaped into the letter "L" of which lower edge supports a number of sustaining wheels attached to the lateral edge of the gear lever transverse mechanism. At the upper part of the frame, there is a frame plate with a fastening means on a number of frame plates for use in fastening to the fastening means on the corresponding edge body to cover the top of the frame body. On the lateral edge engaged with the locking mechanism, there are stud holes for the insertion of locking pins on the locking studs designated in the locked position.

The gear lever transverse mechanism shaped from the metal sheet into the letter "U" of which both ends are fixed to a metal rod. On the metal rod and on the opposite sides, there are further a number of sustaining wheels for use in driving the gear lever transverse mechanism forwardly or backwardly along the lateral edge of the frame body. On the metal rod of the gear lever transverse mechanism in the position where the locking mechanism is installed, there are the locking pin openings in the corresponding number as the locking pins on the locking stud designated in the locked position to fixedly lock the gear lever transverse mechanism.

In accordance with a third preferred embodiment, the present invention provides a gear lever locking device characterized in that the gear lever transverse mechanism is different from the second preferred embodiment. That is, the gear lever transverse mechanism comprises lateral members held with each other via a connecting rod at the upper edge and lower edge, respectively. The lateral members are the metal rods shaped. At the upper and lower walls of the lateral members, there are a number of concaved openings to support ball bearings used in supporting the movement of the lateral members inside the frame body in a more convenient manner. On the metal rod of the gear lever transverse mechanism in the installation of the locking mechanism, there are locking pin openings in the same number as the locking pins on the locking stud designated in the locked position to fixedly lock the gear lever transverse mechanism.

In addition, a portion of the gear lever transverse mechanism comprises a positioning mechanism properly locked at the position of a pin opening on the gear lever transverse mechanism. The pin opening on the lateral edge of the frame body is in the position suitable for receiving the locking pin on the locking stud sliding into the gear lever locking position.

In accordance with a fourth preferred embodiment, the present invention provides a manual transmission gear lever locking device to be installed inside a gear lever cover panel. The manual transmission gear lever locking device comprises a member in the transverse orientation related to a gear lever installed inside the frame body. The member is a metal rod bent into a rectangular frame comprising at least three sides. A pair of the sides is located in an opposite direction. These sides act as the front gear lever transverse rod and the rear gear lever transverse rod, respectively. An extending sustaining axle is provided on the front gear lever transverse rod and the rear gear lever transverse rod. The extending sustaining axle is inserted into the through hole on the front and rear partitioning plate of the frame body. The side that is contiguous with the front gear lever transverse rod and the rear gear lever transverse rod include a protruding axle connected to the wheels moving in the rail of the frame. The axle is used in controlling the movement of the frame on one side. The other side of the front gear lever transverse rod and the rear gear lever transverse rod is attached to the sliding pipe mounted on an axle inside the rail on the other side of the frame to control the movement of the member. The frame of the gear lever transverse member comprises a front and rear partitioning plate having a two sided rail assembled into a rectangular frame, wherein the front and rear partitioning plate is located at the end of the rail. The side of the rail that is installed with the axle is provided with a hole of which size corresponds to the end the axle for use in retaining the axle. There are at least two through holes provided on the axle for use in supporting the stud end of the locking mechanism when locked. In addition, the front and rear partitioning plates comprise through holes to be inserted with the extending sustaining axle from at least one member to sustain the member during its movement.

The lower part of the frame body is provided with fixing legs cast into a proper shape to be installed inside the gear lever cover panel. Through holes are also provided in the positions corresponding to those of the original screws of the vehicle for use in fastening the gear lever locking device to the vehicle. On the fixing legs, there is at least one stud extending upward in the matching manner with the stud groove on the screw guards in the corresponding positions. The screw guards have respective configurations that match that of the fixing legs. The screw guards are positioned to superpose the upper part of the fixing legs and connected together via the stud and the screws fastening the screw guards in the positions corresponding to the components of the gear lever locking device that slide to obstruct the position of the screw guard when the gear lever locking device is in the locked position.

A locking mechanism is provided at the outer lateral part of the frame body installed with the axle. The locking mechanism comprises a locking mechanism body inside of which is provided with a turning mechanism. The turning mechanism is located within the turning mechanism cylinder having a locking pin extending from the end of the turning mechanism cylinder. The locking pin may be locked to the through hole on the axle through the through hole on the frame body and the hole on the pipe in the corresponding positions. The pivotal axle of the turning mechanism is engaged with the locking stud mechanism to prevent the turning mechanism from sliding backward due to the exertion of the return spring force to the end portion extending from the turning mechanism. The engagement, therefore, locks the locking stud with the through hole on the sliding axle when the gear lever locking device is locked.

### BRIEF DESCRIPTION OF THE SEVERAL VIEWS OF THE DRAWINGS

The foregoing summary, as well as the following detailed description of the preferred embodiments of the invention, will be better understood when read in conjunction with the appended drawings. For the purpose of illustrating the invention, there are shown in the drawings embodiments which are presently preferred. It should be understood, however, that the invention is not limited to the precise arrangements and instrumentalities shown.

In the drawings:

Fig. 1 is a perspective view of a gear lever locking device in accordance with a first preferred embodiment of the present invention;

Fig. 2 is an exploded perspective view of the gear lever locking device of Fig. 1;

Fig. 2A is an enlarged side elevational view of a lateral side wall of a second side mounting member of the gear lever locking device of Fig. 1;

Fig. 2B is an enlarged side elevational view of a shaft of the gear lever locking device of Fig. 1;

Fig. 3 is an exploded perspective view of a gear lever locking device in accordance with a second preferred embodiment of the present invention;

Fig. 3A is an enlarged side elevational view of a lateral side wall of a rod member of a gear lever transverse mechanism of the gear lever locking device of Fig. 3;

Fig. 4 is an exploded perspective view of a gear lever locking device in accordance with a third preferred embodiment of the present invention;

Fig. 4A is an enlarged side elevational view of a lateral side wall of a second lateral member of a gear lever transverse mechanism of the gear lever locking device of Fig. 4;

Fig. 5 is an exploded perspective view of a gear lever locking device in accordance with a fourth preferred embodiment of the present invention; and

Fig. 6 is a perspective view of the gear lever locking device of Fig. 5 in a fully assembled configuration.

### DETAILED DESCRIPTION OF THE INVENTION

Reference will now be made in detail to the preferred embodiments of the invention illustrated in the accompanying drawings. Wherever possible, the same or like reference numbers will be used throughout the drawings to refer to the same or like features. It should be noted that the drawings are in simplified form and are not drawn to precise scale. In reference to the disclosure herein, for purposes of convenience and clarity only, directional terms such as top, bottom, above, below and diagonal, are used with respect to the accompanying drawings. Such directional terms used in conjunction with the following description of the drawings should not be construed to limit the scope of the invention in any manner not explicitly set forth. Additionally, the term "a," as used in the specification, means "at least one." The terminology includes the words above specifically mentioned, derivatives thereof, and words of similar import.

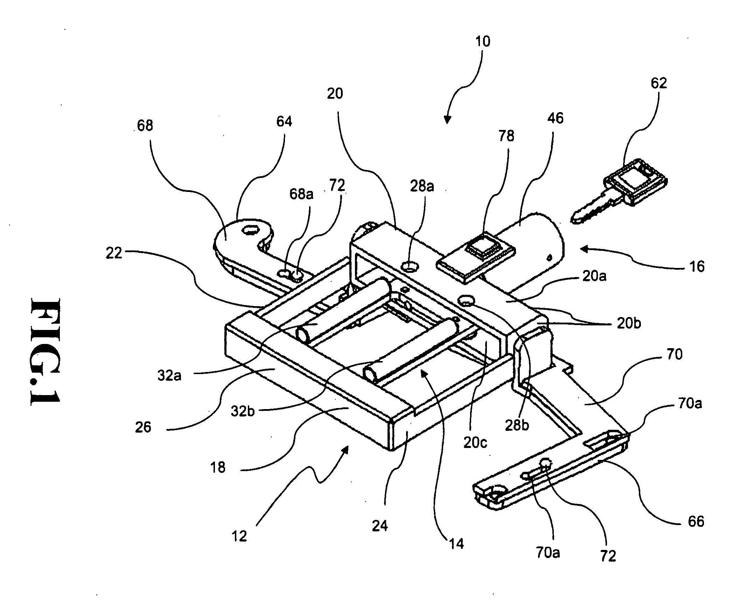

In accordance with a first preferred embodiment, as shown in Figs. 1-2, the present invention provides a gear lever locking device 10 that includes a frame body 12, a gear lever transverse mechanism 14, and a locking mechanism 16. The frame body 12 is preferably configured as a rectangular frame body 12 and includes a first side mounting member 18 and a second side mounting member 20. The first side mounting member 18 is generally configured as a "U" or "C"-shaped member having a front side mounting member 22 and a rear side mounting member 24 extending from opposite ends of a main body portion 26 of the first side mounting member 18. Thus, the first side mounting member 22 has a groove having an opening that is positioned inwardly of the frame body 12 and is used for supporting sustaining wheels 36 attached to a lateral edge of the gear lever transverse mechanism 14, as further described below.

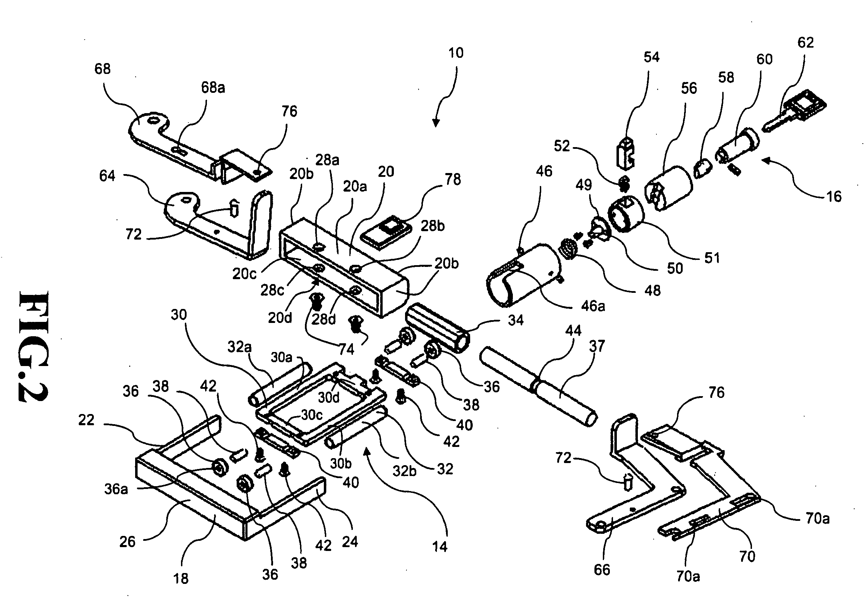

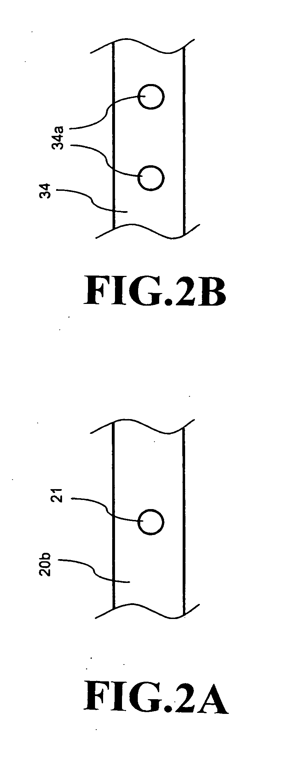

The second side mounting member 20 is generally configured, as best shown in Fig. 2. In particular, the second side mounting member 20 is configured as a substantially hollow rectangular box-like or parallelepiped structure having an upper wall 20a, side walls 20b, and a bottom wall 20c. Thus, the second side mounting member 20 has an open end 20d that is oriented to face the first side mounting member 18, as shown in Fig. 2. The second side mounting member 20 has a groove having an opening that is positioned inwardly of the frame body 12 and used for supporting sustaining wheels 36 attached to a lateral edge of the gear lever transverse mechanism 14, as further described below. Configured along the top wall 20a is a pair of openings 28a and 28b that extend through the top wall 20a. Similarly, the bottom wall 20c includes a pair of openings 28c and 28d that extend through the bottom wall 20c and are axially aligned with the openings 28a and 28b of the top wall 20a, respectively. In the assembled state, the ends of the front side mounting member 22 and rear side mounting member 24 are connected to the ends of the second side mounting member 20, as best shown in Fig. 1. Preferably, the ends of the front side mounting member 22 and rear side mounting member 24 are connected to the outside surfaces of the second side mounting member 20.

The gear lever transverse mechanism 14 is supported by the frame body 12 and includes a transverse mechanism 30, rods 32a, 32b, a shaft 34, and a shaft axle 37. The gear lever transverse mechanism 14 defines a movement of a gear lever (not shown) and is installed inside the frame body 12. The transverse mechanism 30 is configured, as best shown in Fig. 2. In particular, the transverse mechanism 30 is a substantially planar member having a substantially rectangular frame-like configuration with a front end 30a, a rear end 30b, and side ends (or side members) 30c, 30d. The transverse mechanism 30 can be formed from sheet metal and configured to have a rectangular mounting edge inside the frame body 12. The front and rear ends 30a, 30b are also each configured with a reinforcing member 32, such as rods 32a and 32b. The side end 30d is installed with the locking mechanism 16 fixed to a shaft 34, as further described below. The reinforcing member 32 can be any member known in the art to provide additional strength and reinforcement to the transverse mechanism 30, but are preferably configured as rods, such as a cylindrical rod or a tubular rod. The rods 32a, 32b can be attached to the front and rear ends 30a, 30b in any conventional manner know in the art, such as by welding, adhesive, and/or the like.

Each of the side or lateral edges 30c, 30d of the transverse mechanism 30 are configured with respective sustaining wheels 36. The sustaining wheels 36 are connectable to the lateral edges 30c, 30d by any conventional manner know in the art. For example, the sustaining wheels 36 can be connected by a dowel 38 that extends through a central aperture 36a of the sustaining wheel 36 on one end. The other end of the dowel 38 is rigidly connected to the respective lateral edges 30c, 30d by a fastener, such as a clamp 40, which is secured to the transverse member 30 by screws 42. Preferably, the transverse mechanism's lateral edges 30c, 30d are configured with a pair of sustaining wheels 36. The sustaining wheels 36 allow for the gear lever transverse mechanism 14 to slide forwardly and rearwardly within an interior of the main body portion 26 of the first side mounting member 18 and the second side mounting member 20.

The shaft 34 is generally configured, as shown in Fig. 2, and includes a plurality of openings 34a (Fig. 2B) or receiving a locking pin 50 of a locking stud 49, as further described below. The shaft 34 is generally configured as a tubular member having an axial length substantially shorter than the axial length of the shaft axle 37 to allow the shaft 34 to receive the shaft axle 37 therein and slide along the shaft axle 37 a sufficient distance that corresponds to the distance a gear lever may be moved during normal operation. The shaft axle 37 is generally configured as a cylindrical member having a stud groove 44 formed approximately within a mid portion of the shaft axle 37. The stud groove 44 is sized and configured to receive the locking pin 50 for locking the gear lever locking device 10 in a locked configuration. The assembly of the shaft 34 and the shaft axle 37 is configured to reside within the second side mounting member 20, as best shown in Fig. 1.

The locking mechanism 16 is positioned about a lateral side of the frame body 12 and includes a locking mechanism cylinder 46, a return spring 48, a locking pin 50, a stud chamber 51 having a stud 54, a pushing spring 52, a turning mechanism chamber 56, a cam axle 58, a turning mechanism 60, and a key 62, as best shown in Fig. 2. Each of the return spring 48, locking stud 49, stud chamber 51, pushing spring 52, stud 54, turning mechanism chamber 56, cam axle 58, and turning mechanism 60 are configured to be housed and arranged within the locking mechanism cylinder 46, as shown in Fig. 2. The return spring 48, locking stud 54, stud chamber 51 and pushing spring 52 are all movable inside the locking mechanism cylinder 46 due to a force exerted by the return spring 48 or a force from an outer end of the turning mechanism 60. The locking mechanism cylinder 46 includes a stud hole 46a in a wall of the locking mechanism cylinder 46. The turning mechanism chamber 56 includes the turning mechanism 60 arranged therein. The cam axle 58 is engagable with the turning mechanism 60. An end of the turning mechanism 60 is coupled to the cam axle 58, which is connected to an upper notch on an end portion of the stud 54 to drive the stud 54 to the unlocked position in a safe position used in supporting the stud end in the locked position.

In operation, the turning mechanism 60 engages the cam axle 58 which is housed within the turning mechanism chamber 56. As the turning mechanism chamber 56 is turned upon engagement of the turning mechanism 56 by the key 62, the turning mechanism chamber 56 engages with the stud 54. Engagement of the stud 54 further results in the locking stud 49 being either advanced further distally or proximally relative to the turning mechanism chamber 56. That is, upon engagement of the locking mechanism 16, the locking stud 49 can be moved from an unlocked position, wherein the locking stud 49 is housed within the locking chamber cylinder 46 to a locked position, wherein the locking stud 49 extends distally from the locking mechanism chamber 46.

The locking mechanism 16 is assembled and connected to a lateral side of the second mounting member 20. That is, the distal end of the locking mechanism 16 is connected to the side wall 20b of the second side mounting member 20. The side wall 20b also includes an opening 21 (Fig. 2A) to allow the locking pin 50 of the locking stud 49 to pass therethrough when moved to its locked position, thereby engaging the opening 34a (or locking pin openings 34a) on the shaft 34, so as to be received within the stud groove 44 of the shaft axle 37. The locking pin openings 34a are configured to receive the locking pin 50 in the locked position and align with the stud groove 44 on the shaft axle 37 in the locked position to lock the gear lever transverse mechanism 14 in a stationary position. In other words, the gear lever transverse mechanism 14 includes the opening 21 for receiving the locking pin 50. Thus, the locking pin 50 is inserted through the frame body 12 to be locked to the opening 21 on the gear lever transverse mechanism 14. When the locking mechanism 16 is moved to the locked position, the locking pin 50 engages the stud groove 44 of the shaft axle 36, thereby preventing movement of the transverse mechanism 14 (to thereby prevent movement of the gear lever). The key 62 provides a means to engage the locking mechanism 16 and move it between the locked and unlocked positions.

The shaft 34 is connected to an upper surface of the lateral edge 30d of the transverse mechanism 14, similar to the attachment of the rods 32a, 32b to the front and rear ends 30a, 30b. That is, the shaft 34 can be welded to the upper surface of the lateral edge 30d or connected thereto by any other means, such as an adhesive or a fastener. Thus, when the locking mechanism 16 is engaged to move to the locked position, the gear lever transverse mechanism 14 is fixed to the locked position, as the shaft axle 37 extends substantially the same length as the internal dimensions of the side mounting member's major axis.

The gear lever locking device 10 also includes fixing legs 64 and 66, as shown in Figs. 1 and 2. The fixing legs 64, 66 are generally configured to have one end connected to the frame body 12 and an opposite end connected to the vehicle at positions corresponding to original screw locations of the vehicle near the gear lever. Thus, while Fig. 2 illustrates and exemplary configuration of the fixing legs 64, 66, each fixing leg 64, 66 can be configured in any manner such that one end is connectable to the frame body 12 while the other end extends to the location of an original screw location of the vehicle. Screw guards 68, 70 are configured to have a configuration and shape that substantially compliments the fixing legs 64, 66, respectively. The screw guards 68, 70 act as a protective cover for the fixing legs 64, 66, thereby preventing removal or disassembly of the fixing legs 64, 66 from the vehicle. That is, the screw guards 68, 70 are configured with elongated apertures 68a, 70a that allow the screw guards 68, 70 to slide over the screw's location on the fixing legs 64, 66 that are used to fasten the fixing legs 64, 66 to the gear console of the vehicle (not shown). In general, the screw guards 68, 70 are substantially planar members having a profile complimentary to their respective fixing legs 64, 66 and connected to the frame body 12 by screws or studs 74 that pass through openings 76. The gear lever locking device 10 also includes a cover plate 78 used as an additional way of covering a region where the locking mechanism 16 attaches to the frame body 12. That is, the cover plate 78 is configured on the stud hole 46a for covering the stud end inside the locking mechanism cylinder 46.

In operation, the assembled gear lever locking device 10, as shown in Fig. 1, is assembled to a vehicle's gear lever console frame such that the vehicle's gear lever (not shown) extends through a substantially horizontal plane of the transverse mechanism 30 such that the locking mechanism 16 is positioned about the lateral side of the gear lever, which extends substantially in a vertical direction or slightly slanted from vertical. The fixing legs 64, 66 are fastened securely to a frame of the gear lever console (not shown) surrounding the gear lever while the screw guards 68, 70 are connected on top of the fixing legs 64, 66, such that the screw guards 68, 70 cover the fastening screws 72 used to secure the gear lever locking device 10 to the gear console of the vehicle.

The configuration of the gear lever transverse mechanism 14 allows it to slidably move in the forward and rearward directions owing to the sustaining wheels 36 configured about the transverse mechanism 30. Thus, as the gear lever is shifted from one gear to another, typically in the forward and rearward directions, the gear lever transverse mechanism 14 follows. However, when the locking mechanism 16 is moved to the locked position, the gear lever transverse mechanism 14 is locked in a fixed position or a locked position, such that the gear lever transverse mechanism 14 no longer moves in the forward and rearward directions. Thus, as the gear lever extends through a central aperture of the transverse mechanism 30, when the gear lever locking device 10 is in the locked position, it prevents a user from shifting the gear lever in the forward and rearward directions, thereby preventing a user from engaging the gear lever and subsequent use of the vehicle itself.

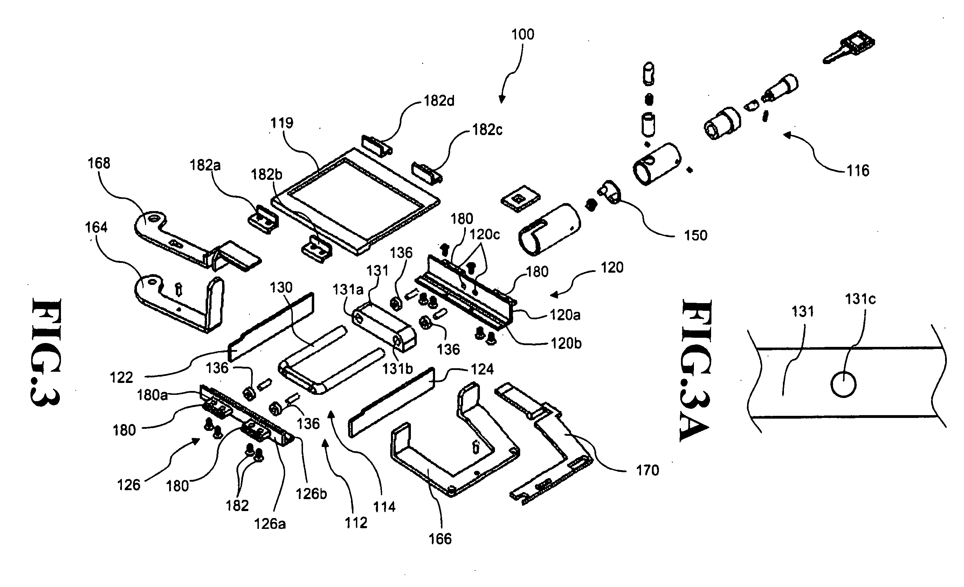

In accordance with a second preferred embodiment, the present invention provides for a gear lever locking device 100, as shown in Fig. 3. The gear lever locking device 100 is substantially the same as the gear lever locking device 10, except for the configuration of a frame body 112 and the gear lever transverse mechanism 114. That is, the gear lever locking device 100 includes fixing legs 164, 166 and screw guards 168, 170, similar to the fixing legs 64, 66 and screw guards 68, 70 of the previous embodiment. In addition, the gear lever locking device 100 includes a locking mechanism 116, as previously described for the gear lever locking device 10.

The frame body 112 includes a front mounting member 122, a rear mounting member 124 and first and second lateral frame members 126 and 120. The second side mounting member or second lateral frame member 120 is engaged with the locking mechanism 116. The front and rear mounting members 122, 124 are configured as substantially planar rectangular members. Each of the first and second lateral frame members 126, 120 is configured as an "L"-shaped bracket or rail edge. The lower edge 120b, 126b of the first and second lateral frame members 126, 120 supports sustaining wheels 136 attached to a lateral edge of the gear lever transverse mechanism 114, as further described below. The first lateral frame member 126 also includes a fastener 180 connected to an upper part of the frame body 112 i.e., a vertical wall segment 126a of the first lateral frame member 126. The fastener 180 is configured and attached to the first lateral frame member 126 so as to have a horizontal extension that includes at least one aperture 180a for receiving a screw fastener 182 therethrough. Preferably, the first lateral frame member 126 includes a pair of fasteners 180, 180. The second lateral frame member 120, similarly includes fasteners 180, 180. In the assembled state, the frame body 112 is configured such that the front and rear mounting members 122, 124 have their respective ends connected to the ends of the first and second lateral frame members 126, 120. In addition, a frame plate 119 having corresponding fastening members 182a, 182b, 182c, 182d about its lateral edges is fastened to the first and second lateral frame members 126, 120, so as to form an upper part of the frame body 112. The fastening members 182a-d are fastened via screws 182 to fasteners 180.

The gear lever transverse mechanism 114 includes a "U"-shaped body 130 and a rod member 131. The "U"-shaped body 130 is configured substantially as a "U"-shaped member. The rod member 131 has a substantially rectangular solid box-like configuration having a pair of apertures 131a, 131b extending through each end of the rod member 131. The apertures 131 a, 131 b are configured to receive respective ends of the "U"-shaped rod body 130 therethrough for forming a substantially rectangular frame-like structure. The assembly of the U-shaped body 130 and rod member 131 is further configured with sustaining wheels 136 and connected thereto, as similarly described for the frame body 12 in the above embodiment. The sustaining wheels 136 allow for the "U"-shaped body 130 and rod member 131 to slide in the forward and rearward directions within the assembled frame body 112 about the horizontal wall segment (or lower edge) 126b, 120b of the first and second lateral frame members 126, 120.

The second lateral frame member 120 additionally includes apertures 120c for receiving a locking stud 150 of the locking mechanism 116, which extends from the locking mechanism 116 when in a locked position. In the locked position, the locking stud 150 extends distally from the locking mechanism 116 through the aperture 120c and into a recess or stud hole 131c (Fig. 3A) formed within the rod member 131 about a side in facing engagement with the vertical wall segment 120a of the second lateral frame member 120. Thus, in the locked position, the transverse mechanism 114 is prevented from moving either in the forward or rearward direction, thereby preventing the subsequent movement of a gear lever extending through the frame body 112 of the transverse mechanism 114, as similarly described above for the gear lever locking device 10.

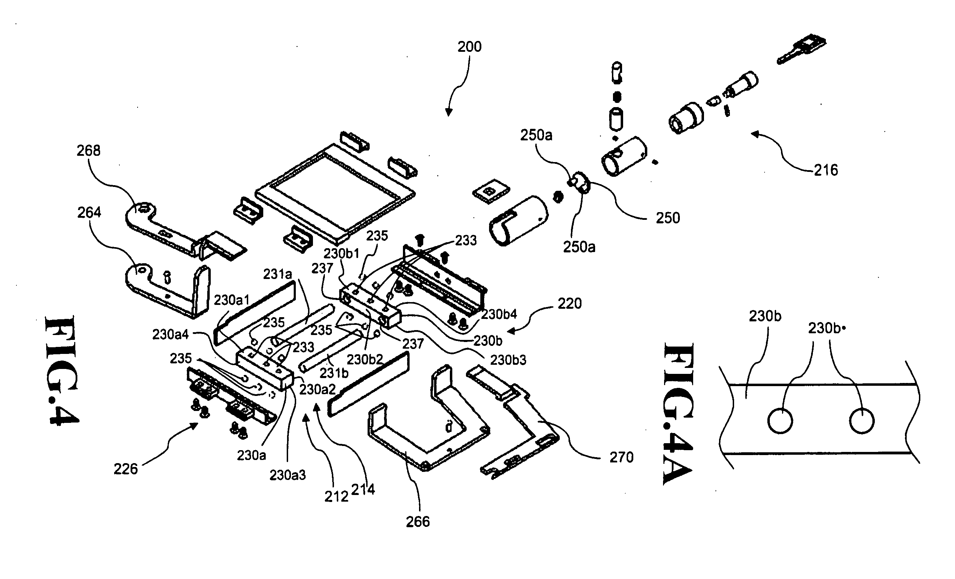

In accordance with a third preferred embodiment, the present invention provides for a gear lever locking device 200, as shown in Fig. 4. The gear lever locking device 200 is substantially the same as for the gear lever locking device 100, except for the configuration of a gear lever transverse mechanism 214. In other words, the frame body 212, the locking mechanism 216, fixing legs 264, 266 and screw guards 268, 270 are configured substantially the same as for the gear lever locking device 100. The present invention differs from the gear lever locking device 100 in its configuration of the gear lever transverse mechanism 214.

The gear lever transverse mechanism 214 includes first and second lateral members 230a, 230b and first and second connecting rods 231 a, 231b. The first and second lateral members 230a, 230b are configured as substantially elongated and rectangular box-like members or metal rods. Each of the first and second lateral members 230a, 230b include an upper surface 230al, 230bl, an inner surface 230a2, 230b2, a lower surface 230a3, 230b3 and an outer surface 230a4, 230b4. The upper and lower surfaces 230al, 230bl, 230a3, 230b3 include a plurality of concaved openings or recesses 233 for receiving ball bearings 235 therein. The ball bearings 235 facilitate movement of the transverse mechanism 214. The inner surface 230a2, 230b2 of each lateral member 230a, 230b includes a pair of openings 237, such as a countersink about the ends of the lateral members 230a, 230b for receiving respective ends of the first and second connecting rods 231 a, 231b. Thus, when the first and second lateral frame members 230a, 230b are connected to the first and second connecting rods 231a, 231b, the gear lever transverse mechanism 214 forms a substantially rectangular frame-like structure. The second lateral frame member 230b i.e., metal rod 230b also includes a recess or countersink or locking pin opening 230b' (Fig. 4A) about its outer surface 230b4 for receiving a locking stud 250 of the locking mechanism 216 when in the locked position. That is, the metal rod 230b includes locking pin openings 230b' in equal number as the locking pins 250a (two locking pins shown for exemplary purposes only) on the locking stud 250 to fixedly lock the gear lever transverse mechanism 214 in the locked position.

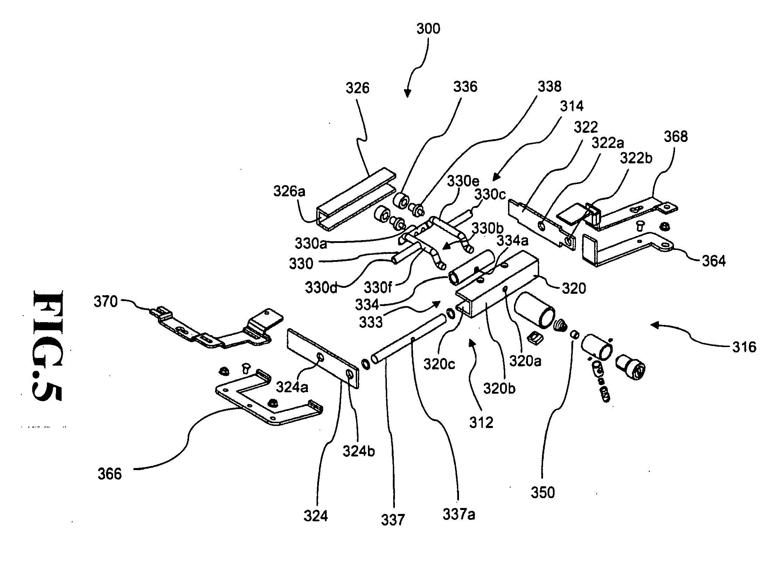

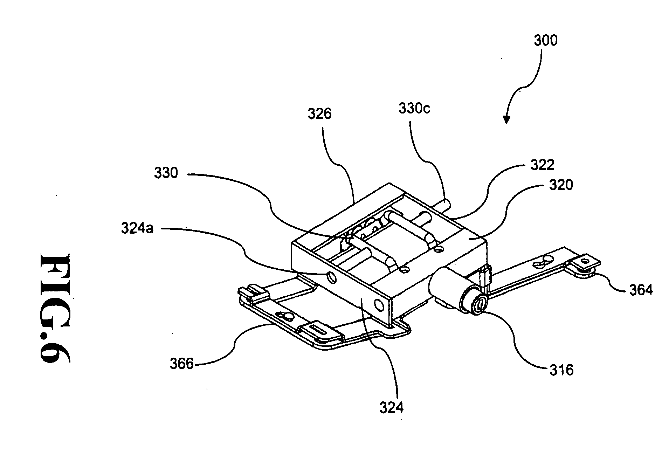

In accordance with a fourth preferred embodiment, the present invention provides a gear lever locking device 300, as shown in Figs. 5 and 6. The gear lever locking device 300 is similar to the gear lever locking device 10, except for the configuration of the frame body 312 and gear lever transverse mechanism 314. That is, the gear lever locking device 300 similarly includes a locking mechanism 316 connected to a lateral side of the frame body 312 fixing legs 364, 366 connected to the frame body 312 and screw guards 368, 370 for attaching the gear lever locking device 300 to the console of a gear lever of a vehicle.

The frame body 312 includes first and second rail members 326, 320 and first and second frame members 322, 324. The first and second rail members 326, 320 are configured as substantially elongated members having a "U"-shaped cross-sectional profile, as best shown in Fig. 5. The first and second frame members 322, 324 are substantially planar members configured for attachment to the first and second rail members 326, 320 about their respective ends, as best shown in Fig. 6. Each of the first and second frame members 322, 324 also includes a central aperture 322a, 324a and an offset aperture 322b, 324b about a lateral end of the gear lever transverse mechanism 314. The rear rail member 320 also includes an aperture 320a about a rear vertical wall 320b of the rail 320 for receiving a locking stud 350 of the locking mechanism 316 when in a locked position, as similarly described in the above embodiments.

The gear lever transverse mechanism 314 includes a member body 330, a sliding pipe 334, an axle 337, at least one extending axle 338, and at least one wheel 336. The member body 330 is configured, as best shown in Fig. 5. That is, the member body 330 has a substantially "U"-shaped profile with a closed left lateral end 330a and an open right lateral end 330b and forwardly and rearwardly extending members 330c, 330d, respectively about a mid portion of the front 330e and rear 330f legs of the member body 330. Each of the forwardly and rearwardly extending members 330c, 330d is configured to be received within the central aperture 322a, 324a of the first and second frame members 322, 324, respectively. The left lateral end 330a of the member body 330 is connected to the extending axle 338, which connects to the wheel 326, such that the member body 330 can slide within a groove 326a of the first rail 326. Preferably, the member body 330 includes two wheel assemblies each having an extending axle 338 and a wheel 336, as best shown in Fig. 5. The right lateral side of the member body 330 is connected to a sliding pipe assembly 333 that includes the sliding pipe 334 and the axle 337. The sliding pipe 334 includes a through hole 334a about its mid portion and has an axial length substantially shorter than the axial length of the axle 337 to allow the sliding pipe 334 to slide along the length of the axle 337. The axial length of the sliding pipe 334 is configured to allow it to move a sufficient distance that corresponds to the distance a gear lever may be moved during normal operation. The axle 337 is also configured to have an axial length substantially the same as the length of the second rail member 320, such that the axle 337 does not travel while residing within a groove 320c. The axle 337 includes a through hole 337a about its mid portion. The axle 337 is configured to reside within the sliding pipe 334, while the assembly of the sliding pipe 334 and axle 337 is configured to reside within a groove 320c of the second rail member 320. The sliding pipe 334 is also connected to the right lateral end of the member body 330, such as by welding or an adhesive. The attachment of the member body 330 to the sliding pipe 334 allows for the member body 330 to move in the forward and rearward directions. Fig. 6 illustrates the gear lever locking device 300 in the fully assembled state.

In sum, the gear lever locking device 300 includes the frame body 312 having first and second rail members 326, 320, fixing legs 364, 366, the locking mechanism 316, and the gear lever transverse mechanism 314 installed inside the frame body 312. The fixing legs 364, 366 are connected to the frame body 312 at a lower part of the frame body 312. The locking mechanism 316 is connected to a lateral side of the frame body 312. The gear lever transverse mechanism 314 has a transverse orientation relative to a gear lever installed inside the frame body 312. The gear lever transverse mechanism 314 includes a metal rod 330 bent into a rectangular frame. The metal rod 330 includes at least three sides 330a, 330e, 330f, wherein a pair of opposite sides of the at least three sides form a front gear lever transverse rod 330e and a rear gear lever transverse rod 330f. A lateral side of the at least three sides extending from the front gear lever transverse rod 330e and the rear gear lever transverse rod 330f is connected to the extending axle 338 engaged with the wheel 336 that slides inside the first rail 326 to control a movement of a vehicle's gear lever on one side of the frame body 312. The other side of the front gear lever transverse rod 330e and the rear gear lever transverse rod 330f is attached to the sliding pipe 334 mounted on the axle 337 to control a movement of the gear lever inside the second rail 320.

The frame body 312 includes the front 322 and the rear partitioning plate 324 holding respective ends of the first and second rails 326, 320 to form a rectangular frame having rails on both sides. One of the lateral ends of the front 322 and rear 324 partitioning plates is positioned at an end of the second rail 320 where an axle 337 with a through hole 337a is attached to the ends of the second rail 320. The axle 337 has at least one through hole 337a for supporting a stud end 350 of the locking mechanism 316 in a locked position.

The frame body 312 includes a number of fixing legs 364, 366 cast into a shape to be installed inside the gear lever cover panel of a vehicle. Through holes in positions corresponding to original screws of the vehicle are used for fastening the gear lever locking device 300 to the vehicle. The fixing legs 364, 366 have at least one stud extending upward in a corresponding manner with a stud groove on the screw guards in corresponding positions. The screw guards 368, 370 have a configuration that matches that of the fixing legs 364, 366, wherein the screw guards 368, 370 cover an upper part of the fixing legs 364, 366 and are connected together via the stud and the screws fastening the gear lever locking device 300 to the gear lever cover panel and are obstructed by the position of the screw guards 368, 370 when the gear lever locking device 300 is in the locked position.

The locking mechanism 316 is connected to a lateral part of the frame body 312 and operatively engaged with the axle 337. The locking mechanism 316 includes a locking mechanism body and a turning mechanism provided inside the locking mechanism body. The turning mechanism is located within a turning mechanism cylinder having a locking pin extending from an end of the turning mechanism cylinder to be locked to a through hole 337a on the axle 337 through a through hole 320a on the frame body 312 and a hole 334a on the sliding pipe 334 corresponding positions. A pivotal axle of the turning mechanism is engaged with the locking stud mechanism to prevent the turning mechanism from sliding backward due to the exertion of a return spring force engaged with an end portion extending from the turning mechanism to lock the locking stud 350 with the through hole 334a on the axle 334 when the gear lever locking device 300 is in the locked position.

The gear lever members on the front gear lever transverse rod 330e and the rear gear lever transverse rod 330f include a first and a second extending sustaining axle 330c, 330d extending from the front gear lever transverse rod 330e and the rear gear lever transverse rod 330f, respectively. The first and second extending sustaining axles 330c, 330d are inserted into the through holes 322a, 324a on the front and rear partitioning plates 322, 324, respectively, of the frame body 312.

It will be appreciated by those skilled in the art that changes could be made to the embodiments described above without departing from the broad inventive concept thereof. For example, additional components and steps can be added to the various gear lever locking devices. It is to be understood, therefore, that this invention is not limited to the particular embodiment disclosed, but it is intended to cover modifications within the scope of the present invention as defined by the appended claims.

## Claims

1. A gear lever locking device (10) comprising:
a frame body (12);
a gear lever transverse mechanism (14) supported by the frame body (12), wherein the gear lever transverse mechanism (14) defines a movement of a gear lever and is installed inside the frame body (12), the gear lever transverse mechanism (14) includes an opening (34a); and
a locking mechanism (16) about a lateral side of the frame body (12), wherein the locking mechanism (16) is movable between a locked position and an unlocked position, the locking mechanism (16) includes:
a locking pin (50) for engaging the opening (34a) of the gear lever transverse mechanism (14),
wherein the locking pin (50) is inserted through the frame body (12) to be locked to the opening (34a) on the gear lever transverse mechanism (14); and
a key (62) for moving the locking mechanism (16) between the locked and unlocked positions, **characterized in that**
a lateral side of the frame body (12) includes a number of fixing legs (64, 66) bent into a shape that can be attached to positions of original screws of a vehicle.

2. The gear lever locking device according to claim 1, **characterized in that** the locking mechanism (16) further comprises:
a locking mechanism cylinder (46) having a stud hole (46a) on a wall of the locking mechanism cylinder (46);
a return spring (48), a locking stud (49), a stud chamber (51) having a stud (54) and a pushing spring (52) all serially arranged within the locking mechanism cylinder (46) from a rear end of a turning mechanism chamber (56), respectively;
wherein the return spring (48), the locking stud (49), the stud chamber (51) and the pushing spring (52) are all movable inside the locking mechanism cylinder (46) due to a force exerted by the return spring (48) or a force from an outer end of a turning mechanism (60);
wherein the turning mechanism chamber (56) includes:
the turning mechanism (60) arranged within the turning mechanism chamber (56),
a cam axle (58) engageable with the turning mechanism (60), and
wherein an end of the turning mechanism (60) is coupled to the cam axle (58) which is connected to an upper notch on an end portion of the stud (54) to drive the stud (54) to the unlocked position in a safe position used in supporting the stud end in the locked position; and
a cover plate (78) configured on the stud hole (46a) for covering the stud end inside the locking mechanism cylinder (46).

3. The gear lever locking device according to claim 1, **characterized in that** the frame body (12) is configured as a rectangular frame body having side mounting members (18, 20) and front and rear side mounting members (22, 24),
wherein the gear lever transverse mechanism (14) is arranged inside the frame body (12), and the side mounting members (18, 20) are "C" shape,
wherein each side mounting member includes a groove having an open end that is positioned inward of the frame body (12) and used in supporting sustaining wheels (36) attached to a lateral edge of the gear lever transverse mechanism (14), and one of the side mounting members (18, 20) is coupled to the locking mechanism (16), and
wherein the locking pin (50) on the locking stud (49) is inserted through the opening (34a) of the gear lever transverse mechanism (14).

4. The gear lever locking device according to claim 1, **characterized in that** the gear lever transverse mechanism (14) is formed from sheet metal and includes a rectangular mounting edge inside the frame body (12),
wherein sustaining wheels (36) are attached to a lateral edge of the gear lever transverse mechanism (14) by attaching means,
wherein a side member (30d) of the gear lever transverse mechanism (14) is installed with the locking mechanism (16) fixed to a shaft (34) mounted to a shaft axle (37) installed inside the side mounting member (20) of the frame body (12),
wherein on the shaft (34), there are locking pin openings (34a) configured to receive the locking stud (49) in the locked position and aligned with the stud groove (44) on the shaft axle (37) in the locked positioned to lock the gear lever transverse mechanism (14) in a stationary position.

5. The gear lever locking device according to claim 1, **characterized in that** the frame body (112) includes a first and a second side mounting member (126, 120) and forward and backward mounting members (122, 124) forming a rectangular frame,
wherein the gear lever transverse mechanism (114) is installed inside the rectangular frame, the first side mounting member (126) includes a rail edge that is "L" shaped and has a lower edge that supports sustaining wheels (136) attached to a lateral edge of the gear lever transverse mechanism (114), and
at an upper part of the frame body (112), there is a frame plate (119) with fastening means for fastening the frame plate (119) on a corresponding lateral edge to cover the top of the frame body (112), and
on one of the first and second side mounting members (126, 120) is engaged with the locking mechanism (116), and includes stud holes (120c) for receiving the locking pin (150) to lock the locking mechanism (116) in the locked position.

6. The gear lever locking device according to claim 1, **characterized in that** the gear lever transverse mechanism (114) is formed from sheet metal into a "U" shaped body (130) having upper ends fixed to a metal rod (131),
wherein on opposite sides of the metal rod (131), there are sustaining wheels (136) for driving the gear lever transverse mechanism (114) forward or backward along a lateral edge of the frame body (112), and on the metal rod (131) of the gear lever transverse mechanism (114) in a position where the locking mechanism (116) is installed, there are locking pin openings (131c) in a corresponding number as the locking pin (150) on the locking stud designated in the locked position to fixedly lock the gear lever transverse mechanism (114).

7. The gear lever locking device according to claim 1, **characterized in that** the gear lever transverse mechanism (214) comprises:
lateral members (230a, 230b) connected to each other by a connecting rod (231 a, 231 b), wherein the lateral members are metal rods shaped at upper and lower walls to form a number of concaved openings (233) for receiving ball bearings (235) used in supporting movement of the lateral members inside the frame body (212), and
on the metal rods of the gear lever transverse mechanism (214) in installation of the locking mechanism (216), there are locking pin openings in equal number as the locking pins on the locking stud in the locked position to fixedly lock the gear lever transverse mechanism (214).

8. The gear lever locking device according to claim 2, **characterized in that** on the gear lever transverse mechanism (14), there is a positioning mechanism to properly lock at a position of a pin opening (34a) on the gear lever transverse mechanism (14), and
the pin opening on a lateral edge of the frame body (12) is in a position suitable for receiving the locking pin (50) on the locking stud sliding into a gear lever locking position.

9. The gear lever locking device according to claim 1, **characterized in that** on the fixing legs there are screw guards (68, 70) shaped into a configuration that matches that of the fixing legs (64, 66) to prevent removal of fastening screws for fastening the fixing legs to the vehicle.

10. The gear lever locking device according to claim 9, **characterized in that** the screw guards (68, 70) are fastened to a portion above the fixing legs (64, 66) with a number of studs (74) and an end of the screw guard is attached to the frame body (12) with a number of screws in a position that the gear lever transverse mechanism slides to cover the screws (74) while in the locked position.

11. A gear lever locking device (300) comprising:
a frame body (312);
a locking mechanism (316) connected to a lateral side of the frame body (312); and
a gear lever transverse mechanism (314) installed inside the frame body, the gear lever transverse mechanism (314) has a transverse orientation relative to a gear lever installed inside the frame body (312), **characterized in that**
the frame body has a first and a second rail (326, 320) and that the gear lever transverse mechanism (314) includes:
a metal rod (330) bent into a rectangular frame that includes:
at least three sides (330a, 330e, 330f), wherein a pair of opposite sides of the at least three sides form a front gear lever transverse rod (330e) and a rear gear lever transverse rod (330f), and
wherein a lateral side of the at least three sides extending from the front gear lever transverse rod (330e) and the rear gear lever transverse rod (330f) is connected to an extending axle (338) engaged with a wheel (336) that slides inside the first rail (336) to control a movement of the gear lever on one side of the frame body (312) while the other side of the front gear lever transverse rod (330e) and the rear gear lever transverse rod (330f) is attached to a sliding pipe (334) mounted on an axle (337) to control a movement of the gear lever inside the second rail (320), and comprising fixing legs (364, 366) connected to the frame body at a lower part of the frame body (312).

12. The gear lever locking device according to claim 11, **characterized in that** the frame body (312) comprises a front and a rear partitioning plate (322, 324) holding respective ends of the first and second rails (326, 320) to form a rectangular frame having rails on both sides, wherein one of the lateral ends of the front and rear partitioning plates (322, 324) are positioned at an end of the second rail (320) where an axle (337) with a through hole (337a) is attached to the ends of the second rail (320).

13. The gear lever locking device according to claim 12, **characterized in that** the axle (337) comprises at least one through hole (337a) for supporting a stud end of the locking mechanism (316) in a locked position.

14. The gear lever locking device according to claim 11, **characterized in that** the frame body (312) comprises:
a number of fixing legs (364, 366) cast into a shape to be installed inside a gear lever cover panel of a vehicle and through holes in positions corresponding to original screws of the vehicle for use in fastening the gear lever locking device to the vehicle, and
on the fixing legs, there is at least one stud extending upward in a corresponding manner with a stud groove on the screw guards (368, 370) in corresponding positions, the screw guards having a configuration that matches that of the fixing legs (364, 366),
wherein the screw guards (368, 370) cover an upper part of the fixing legs (364, 366) and are connected together via the stud and the screws fastening the gear lever locking device (300) to the gear lever cover panel are obstructed by the position of the screw guards when the gear lever locking device is in the locked position.

15. The gear lever locking device according to claim 11, **characterized in that** the locking mechanism (316) is connected to a lateral part of the frame body (312) and operatively engaged with the axle (337), and
wherein the locking mechanism (316) comprises:
a locking mechanism body (46),
a turning mechanism (60) provided inside the locking mechanism body (46), wherein the turning mechanism (60) is located within a turning mechanism cylinder (56) having a locking pin (50) extending from an end of the turning mechanism cylinder (56) to be locked to a through hole (337a) on the axle (337) through a through hole (320a) on the frame body (312) and a hole (334a) on the sliding pipe (334) in corresponding positions, and a pivotal axle of the turning mechanism (60) is engaged with the locking stud mechanism to prevent the turning mechanism (60) from sliding backward due to the exertion of a return spring force engaged with an end portion extending from the turning mechanism (60) to lock the locking pin (50) with the through hole on the axle (337) when the gear lever locking device is in a locked position.

16. The gear lever locking device according to claim 11, **characterized in that** the gear lever members on the front gear lever transverse rod (330e) and the rear gear lever transverse rod (330f) further comprise a first and a second extending sustaining axle (330, 330d) extending from the front gear lever transverse rod (330e) and the rear gear lever transverse rod (330f) respectively, which are inserted into the through holes on the front and rear partitioning plates (322, 324), respectively, of the frame body (312).

## Patentansprüche

1. Schalthebelsperrvorrichtung (10) umfassend:
einen Rahmenkörper (12);
einen Schalthebeltransversalmechanismus (14), der durch den Rahmenkörper (12) gehalten wird, wobei der Schalthebeltransversalmechanismus (14) eine Bewegung des Schalthebels festlegt und innerhalb des Rahmenkörpers (12) verbaut ist, wobei der Schalthebeltransversalmechanismus (14) eine Öffnung (34a) aufweist; und
einen Sperrmechanismus (16) an einer lateralen Seite des Rahmenkörpers (12), wobei der Sperrmechanismus (16) zwischen einer Sperrposition und einer Entsperrposition bewegbar ist, wobei der Sperrmechanismus (16) beinhaltet:
einen Sperrstift (50) um in die Öffnung (34a) des Schalthebeltransversalmechanismus (14) einzugreifen,
wobei der Sperrstift (50) durch den Rahmenkörper (12) eingeführt wird, um in der Öffnung (34a) an dem Schalthebeltransversalmechanismus (14) gesperrt zu werden; und
einen Schlüssel (62), um den Sperrmechanismus (16) zwischen der Sperr- und der Entsperrpositionen zu bewegen,
**dadurch gekennzeichnet, dass** eine laterale Seite des Rahmenkörpers (12) eine Anzahl an Befestigungsschenkeln (64, 66) aufweist, die in eine Form gebogen sind, mit derer diese an Positionen von Originalschrauben eines Fahrzeugs anbringbar sind.

2. Schalthebelsperrvorrichtung nach Anspruch 1, **dadurch gekennzeichnet, dass** der Sperrmechanismus (16) ferner umfasst:
einen Sperrmechanismuszylinder (46) mit einem Bolzenloch (46a) an einer Wand des Sperrmechanismuszylinders (46);
eine Rückstellfeder (48), einen Sperrbolzen (49), eine Bolzenkammer (51) mit einem Bolzen (54) und einer Druckfeder (52), die alle jeweils seriell innerhalb Sperrmechanismuszylinders (46) von einem hinteren Ende einer Drehmechanismuskammer (56) angeordnet sind;
wobei die Rückstellfeder (48), der Sperrbolzen (49), die Bolzenkammer (51) und die Druckfeder (52) alle innerhalb des Sperrmechanismuszylinders (46) mit einer durch die Rückstellfeder (48) ausgeübten Kraft oder mit einer durch ein äußeres Ende des Drehmechanismus (60) ausgeübten Kraft bewegbar sind;
wobei die Drehmechanismuskammer (56) beinhaltet:
den innerhalb der Drehmechanismuskammer (56) angeordneten Drehmechanismus (60),
eine Nockenachse (58), die mit dem Drehmechanismus (60) in Eingriff bringbar ist,
wobei ein Ende des Drehmechanismus (60) mit der Nockenachse (58) gekoppelt ist, welche mit einer oberen Kerbe an einem Endabschnitt des Bolzens (54) verbunden ist, um den Bolzen (54) in die Entsperrposition in einer Sicherheitsposition zu verfahren, die verwendet wird um das Bolzenende in der Sperrposition zu halten; und
eine Deckplatte (78), die an dem Bolzenloch (46a) zum Abdecken des Bolzenendes innerhalb des Sperrmechanismuszylinders (46) ausgebildet ist.

3. Schalthebelsperrvorrichtung nach Anspruch 1, **dadurch gekennzeichnet, dass** der Rahmenkörper (12) als rechteckiger Rahmenkörper mit seitlichen Befestigungselementen (18, 20) und Vorder- und Hinterflächenbefestigungselementen (22, 24) ausgestaltet ist,
wobei der Schalthebeltransversalmechanismus (14) innerhalb des Rahmenkörpers (12) angeordnet ist, und die seitlichen Befestigungselemente (22, 24) C-förmig sind,
wobei jedes seitliche Befestigungselement eine Aussparung mit einem offenen Ende aufweist, welches einwärts des Rahmenkörpers (12) positioniert ist und verwendet wird, um Trageräder (36) zu unterstützen, welche an einer lateralen Kante des Schalthebeltransversalmechanismus (14) angebracht sind, und eines der seitlichen Befestigungselemente (18, 20) mit dem Sperrmechanismus (16) gekoppelt ist,
wobei der Sperrstift (50) an dem Sperrbolzen (49) durch die Öffnung (34a) des Schalthebeltransversalmechanismus (14) eingebracht ist.

4. Schalthebelsperrvorrichtung nach Anspruch 1, **dadurch gekennzeichnet, dass** der Schalthebeltransversalmechanismus (14) durch ein Blech gebildet wird und eine rechteckige Befestigungskante innerhalb des Rahmenkörpers (12) beinhaltet,
wobei Trageräder (36) an einer lateralen Kante des Schalthebeltransversalmechanismus (14) durch Befestigungsmittel angebracht sind,
wobei ein Seitenelement (30d) des Schalthebeltransversalmechanismus (14) mit dem Sperrmechanismus (16) verbaut ist, der an einem Schaft (34) befestigt ist, der an einer Schaftachse (37) angebracht und innerhalb des seitlichen Befestigungselements (20) des Rahmenkörpers (12) verbaut ist,
wobei an dem Schaft (34) Sperrstiftöffnungen (34a) zur Aufnahme des Sperrbolzens (49) in der Sperrposition ausgebildet sind und mit der Bolzenaussparung (44) an der Schaftachse (37) in der Sperrposition ausgerichtet sind, um den Schalthebeltransversalmechanismus (14) in einer stationären Position zu sperren.

5. Schalthebelsperrvorrichtung nach Anspruch 1, **dadurch gekennzeichnet, dass** der Rahmenkörper (112) ein erstes und ein zweites seitliches Befestigungselement (126, 120) und vordere und hintere Befestigungselemente (122, 124) beinhaltet, die einen rechteckigen Rahmen bilden,
wobei der Schalthebeltransversalmechanismus (114) innerhalb des rechteckigen Rahmens verbaut ist, wobei das erste seitliche Befestigungselement (126) eine L-förmige Schienenkante aufweist, die an einer lateralen Kante des Schalthebeltransversalmechanismus (114) angebrachte Trageräder (136) stützt, und
an einem oberen Teil des Rahmenkörpers (112) sich eine Rahmenplatte (119) mit Befestigungsmitteln zum Befestigen der Rahmenplatte (119) an einer korrespondierenden lateralen Kante zum Abdecken der Oberseite des Rahmenkörpers (112) befindet, und
an einem der ersten und zweiten seitlichen Befestigungselemente (126, 120) mit dem Sperrmechanismus (116) in Eingriff steht, und Bolzenlöcher (120c) zur Aufnahme des Sperrstifts (150) zum Sperren des Sperrmechanismus (116) in der Sperrposition aufweist.

6. Schalthebelsperrvorrichtung nach Anspruch 1, **dadurch gekennzeichnet, dass** der Schalthebeltransversalmechanismus (114) aus einem Blech mit U-förmigen Körper (130) gebildet ist mit oberen Enden, die an einer Metallstange (131) befestigt sind,
wobei an gegenüberliegenden Seiten der Metallstange (131) Trageräder (136) zum Verfahren des Schalthebeltransversalmechanismus (114) nach vorwärts und rückwärts entlang einer lateralen Kante des Rahmenkörpers (112) angeordnet sind, und an der Metallstange (131) des Schalthebeltransversalmechanismus (114) in einer Position, in welcher der Sperrmechanismus (116) verbaut ist, Sperrstiftöffnungen (131c) in einer korrespondierenden Anzahl zu dem Sperrstift (150) an dem Sperrbolzen für die Sperrposition vorgesehen sind, die zum fixierten Sperren des Schalthebeltransversalmechanismus (114) ausgelegt sind.

7. Schalthebelsperrvorrichtung nach Anspruch 1, **dadurch gekennzeichnet, dass** der Schalthebeltransversalmechanismus (214) umfasst:
laterale Elemente (230a, 230b), die miteinander mittels einer Verbindungsstange (231a, 231b) verbunden sind, wobei die lateralen Elemente Metallstangen sind, in denen an den oberen und unteren Wänden eine Anzahl an konkaver Öffnungen (233) zur Aufnahme von Kugellagern (235) geformt sind, die zur Unterstützung der Bewegung der lateralen Elemente innerhalb des Rahmenkörpers (212) verwendet werden, und an den Metallstangen des Schalthebeltransversalmechanismus (214) beim Einbau des Sperrmechanismus (216) Sperr-stiftöffnungen in gleicher Anzahl wie die der Sperrstifte an dem Sperrbolzen in der gesperrten Position vorgesehen sind, die zum fixierten Sperren des Schalthebeltransversalmechanismus (214).

8. Schalthebelsperrvorrichtung nach Anspruch 2, **dadurch gekennzeichnet, dass** an dem Schalthebeltransversalmechanismus (14) ein Positioniermechanismus zum entsprechenden Sperren in einer Position einer Stiftöffnung (34a) an dem Schalthebeltransversalmechanismus (14) vorgesehen ist, und
sich die Stiftöffnung an einer lateralen Kante des Rahmenkörpers (12) in einer Position befindet, die geeignet ist, um den an dem Sperrbolzen befindlichen Sperrstift (50) aufzunehmen, um in eine Schalthebelsperrposition zu gleiten.

9. Schalthebelsperrvorrichtung nach Anspruch 1, **dadurch gekennzeichnet, dass** an den Befestigungsschenkeln Schraubensicherungen (68, 70) vorgesehen sind, die in einer Konfiguration gestaltet sind, die zu jener der Befestigungsschenkel (64, 66) passt, um ein Entfernen der Befestigungsschrauben zur Befestigung der Befestigungsschenkel an dem Fahrzeug zu verhindern.

10. Schalthebelsperrvorrichtung nach Anspruch 9, **dadurch gekennzeichnet, dass** die Schraubensicherungen (68, 70) an einem Abschnitt oberhalb der Befestigungsschenkel (64, 66) mit einer Anzahl an Bolzen (74) befestigt sind und ein Ende der Schraubensicherung mit einer Anzahl an Schrauben an dem Rahmenkörper (12) in einer Position angebracht ist, in der der Schalthebeltransversalmechanismus sich verschiebt, um in der Sperrposition die Schrauben (74) zu überdecken.

11. Eine Schalthebelsperrvorrichtung (300) umfassend:
einen Rahmenkörper (312);
einen mit einer lateralen Seite des Rahmenkörpers (312) verbundenen Sperrmechanismus (316); und
einen innerhalb des Rahmenkörpers verbauten Schalthebeltransversalmechanismus (314), wobei der Schalthebeltransversalmechanismus (314) eine transversale Orientierung in Bezug auf einem im Rahmenkörper (312) verbauten Schalthebel aufweist,
**dadurch gekennzeichnet, dass**
der Rahmenkörper eine erste und eine zweite Schiene (326, 320) aufweist und der Schalthebeltransversalmechanismus (314) eine Metallstange (330) beinhaltet, die in einen rechteckigen Rahmen gebogenen ist und
zumindest drei Seiten (330a, 330e, 330f) beinhaltet, wobei ein Paar gegenüberliegender Seiten von zumindest drei Seiten eine vordere Schalthebeltransversalstange (330e) und eine hintere Schalthebeltransversalstange (330f) bildet, und
wobei eine laterale Seite der zumindest drei Seiten, die sich entlang vordere Schalthebeltransversalstange (330e) und der hinteren Schalthebeltransversalstange (330f) erstrecken, mit einer erweiternden Achse (338) verbunden ist, die mit einem Rad (336) in Eingriff steht, welches innerhalb der ersten Schiene (336) zum Kontrollieren der Bewegung des Schalthebels an einer Seite des Rahmenkörpers (312) verfährt, wobei die andere Seite der vorderen Schalthebeltransversalstange (330e) und die hintere Schalthebeltransversalstange (330f) an einem Gleitrohr (334) angebracht sind, welches an einer Achse (337) befestigt ist, um eine Bewegung des Schalthebels innerhalb der zweiten Schiene (320) zu kontrollieren, und Befestigungsschenkel (364, 366) umfassend, die mit einem unteren Teil des Rahmenkörpers (312) verbunden sind.

12. Schalthebelsperrvorrichtung nach Anspruch 11, **dadurch gekennzeichnet, dass** der Rahmenkörper (312) eine vordere und eine hintere Trennplatte (322, 324) umfasst, an denen jeweilige Enden der ersten und zweiten Schienen (326, 320) gehalten werden, um einen rechteckigen Rahmen zu bilden, der an beiden Seiten Schienen aufweist, wobei eines der lateralen Enden der vorderen und hinteren Trennplatten (322, 324) an einem Ende der zweiten Schiene (320) angeordnet sind, an welchem eine Achse (337) mit einer Durchgangsbohrung (337a) an die Enden der zweiten Schiene (320) angebracht ist.

13. Schalthebelsperrvorrichtung nach Anspruch 12, **dadurch gekennzeichnet, dass** die Achse (337) zumindest eine Durchgangsbohrung (337a) zum Tragen eines Bolzenendes des Sperrmechanismus (316) in einer Sperrposition umfasst.

14. Schalthebelsperrvorrichtung nach Anspruch 11, **dadurch gekennzeichnet, dass** der Rahmenkörper (312) umfasst:
eine Anzahl an Befestigungsschenkeln (364, 366), die zum Verbau innerhalb eines Schalthebeldeckpanels eines Fahrzeugs in eine Form gegossen sind, und Durchgangsbohrungen in Positionen, die mit den Originalschrauben des Fahrzeugs korrespondieren, zur Verwendung bei der Befestigung der Schalthebelsperrvorrichtung auf dem Fahrzeug, und
zumindest einen an den Befestigungsschenkeln angeordneten Bolzen, der sich in korrespondierender Weise mit einer Bolzenaussparung an den Schraubensicherungen (368, 370) in korrespondierenden Positionen aufwärts erstreckt, wobei die Schraubensicherungen eine Konfiguration aufweisen, die der der Befestigungsschenkeln (364, 366) angepasst ist, wobei Schraubensicherungen (368, 370) einen oberen Teil der Befestigungsschenkel (364, 366) abdecken und mittels des Bolzens miteinander verbunden sind und die Schrauben, die die Schalthebelsperrvorrichtung (300) an dem Schalthebeldeckpanel befestigen, durch die Position der Schraubensicherungen blockiert werden, wenn sich die Schalthebelsperrvorrichtung in der Sperrposition befindet.

15. Schalthebelsperrvorrichtung nach Anspruch 11, **dadurch gekennzeichnet, dass** der Sperrmechanismus (316) mit einem lateralen Teil des Rahmenkörpers (312) verbunden ist und mit der Achse (337) operativ in Eingriff steht,
wobei der Sperrmechanismus 316) umfasst:
einen Sperrmechanismuskörper (46),
einen Drehmechanismus (60), der innerhalb des Sperrmechanismuskörpers (46) vorgesehen ist, wobei der Drehmechanismus (60) innerhalb eines Drehmechanismuszylinders (56) mit einen Sperrstift (50) angeordnet ist, der sich von einem Ende des Drehmechanismuszylinders (56) erstreckt, um in einer Durchlassbohrung (337a) an der Achse (337) durch eine Durchlassbohrung (320a) an dem Rahmenkörper (312) und eine Bohrung (334a) an dem Gleitrohr (334) in korrespondierenden Positionen gesperrt zu werden, und eine Drehachse des Drehmechanismus (60) in Eingriff mit dem Sperrbolzenmechanismus ist, um ein rückwärtiges Verschieben des Drehmechanismus (60) durch Ausübung einer Rückstellfederkraft zu verhindern, die mit einem Endabschnitt, der sich von dem Drehmechanismus (60) erstreckt, in Eingriff steht, um den Sperrstift (50) mit der Durchlassbohrung an einer Achse (337) zu sperren, wenn sich die Schalthebelsperrvorrichtung in einer gesperrten Position befindet.

16. Schalthebelsperrvorrichtung nach Anspruch 11, **dadurch gekennzeichnet, dass** die Schalthebelelemente an der vorderen Schalthebeltransversalstange (330e) und die hintere Schalthebeltransversalstange (330f) des Weiteren eine erste und eine zweite erweiterte Halteachse (330, 330d) aufweisen, die sich jeweils von der vorderen Schalthebeltransversalstange (330e) und der hinteren Schalthebeltransversalstange (330f) erstrecken, welche jeweils in die Durchlassbohrungen an den vorderen und den hinteren Trennplatten (322, 324) des Rahmenkörpers (312) eingebracht werden.

## Revendications

1. Dispositif de verrouillage de levier de vitesses (10) comprenant :
un corps de cadre (12) ;
un mécanisme transversal de levier de vitesses (14) supporté par le corps de cadre (12), le mécanisme transversal de levier de vitesses (14) définit un mouvement d'un levier de vitesses et étant installé à l'intérieur du corps de cadre (12), le mécanisme transversal de levier de vitesses (14) comporte une ouverture (34a) ; et
un mécanisme de verrouillage (16) autour d'un côté latéral du corps de cadre (12), le mécanisme de verrouillage (16) étant mobile entre une position verrouillée et une position déverrouillée, le mécanisme de verrouillage (16) comporte :
une goupille de verrouillage (50) pour mettre en prise l'ouverture (34a) du mécanisme transversal du levier de vitesses (14),
dans lequel la goupille de verrouillage (50) est insérée à travers le corps de cadre (12) pour être verrouillée sur l'ouverture (34a) du mécanisme transversal de levier de vitesses (14) ; et
une clé (62) pour déplacer le mécanisme de verrouillage (16) entre les positions verrouillée et déverrouillée, **caractérisé en ce que**
un côté latéral du corps de cadre (12) comporte un certain nombre de pattes de fixation (64, 66) courbées selon une forme leur permettant d'être attachées à des positions de vis d'origine d'un véhicule.

2. Dispositif de verrouillage de levier de vitesses selon la revendication 1, **caractérisé en ce que** le mécanisme de verrouillage (16) comprend en outre :
un cylindre de mécanisme de verrouillage (46) ayant un trou de goujon (46a) sur une paroi du cylindre de mécanisme de verrouillage (46) ;
un ressort de rappel (48), un goujon de verrouillage (49), une chambre de goujon (51) ayant un goujon (54) et un ressort de poussée (52) tous disposés en série respectivement à l'intérieur du cylindre de mécanisme de verrouillage (46) depuis une extrémité arrière d'une chambre de mécanisme tournant (56) ;
dans lequel le ressort de rappel (48), le goujon de verrouillage (49), la chambre de goujon (51) et le ressort de poussée (52) sont tous mobiles à l'intérieur du cylindre de mécanisme de verrouillage (46) en raison d'une force exercée par le ressort de rappel (48) ou d'une force provenant d'une extrémité externe d'un mécanisme tournant (60) ;
dans lequel la chambre de mécanisme tournant (56) comporte :
le mécanisme tournant (60) disposé à l'intérieur de la chambre de mécanisme tournant (56),
un axe de came (58) pouvant se mettre en prise avec le mécanisme tournant (60), et
dans lequel une extrémité du mécanisme tournant (60) est couplée à l'axe de came (58) qui est relié à une encoche supérieure sur une partie d'extrémité du goujon (54) pour entraîner le goujon (54) ver la position déverrouillée dans une position de sécurité utilisée pour supporter l'extrémité du goujon dans la position verrouillée ; et
une plaque de recouvrement (78) configuré sur le trou de goujon (46a) pour couvrir l'extrémité du goujon à l'intérieur du cylindre du mécanisme de verrouillage (46).

3. Dispositif de verrouillage de levier de vitesses selon la revendication 1, **caractérisé en ce que** le corps de cadre (12) est configuré comme un corps de cadre rectangulaire ayant des éléments de montage latéraux (18, 20) et des éléments de montage avant et arrière (22, 24),
dans lequel le mécanisme transversal de levier de vitesses (14) est disposé à l'intérieur du corps de cadre (12) et les éléments de montage latéraux (18, 20) sont en forme de « C »,
dans lequel chaque élément de montage latéral comporte une gorge ayant une extrémité ouverte qui est positionnée vers l'intérieur du corps de cadre (12) et utilisée pour supporter les roues de soutien (36) attachées à un bord latéral du mécanisme transversal de levier de vitesses (14), et l'un des éléments de montage latéral (18, 20) est couplé au mécanisme de verrouillage (16), et
dans lequel la goupille de verrouillage (50) sur le goujon de verrouillage (49) est insérée par l'ouverture (34a) du mécanisme transversal du levier de vitesses (14).

4. Dispositif de verrouillage de levier de vitesses selon la revendication 1, **caractérisé en ce que** le mécanisme transversal de levier de vitesses (14) est formé à partir de tôle et comporte un bord de montage rectangulaire à l'intérieur du corps de cadre (12),
dans lequel les roues de soutien (36) sont attachées à un bord latéral du mécanisme transversal du levier de vitesses (14) par des moyens d'attache,
dans lequel un élément latéral (30d) du mécanisme transversal de levier de vitesses (14) est installé avec le mécanisme de verrouillage (16) fixé à un arbre (34) monté sur un axe d'arbre (37) installé à l'intérieur de l'élément de montage latéral (20) du corps de cadre (12),
dans lequel sur l'arbre (34), se trouvent des ouvertures de goupille de verrouillage (34a) configurées pour recevoir le goujon de verrouillage (49) dans la position verrouillée et alignées avec la gorge de goujon (44) sur l'axe d'arbre (37) dans la position verrouillée pour verrouiller le mécanisme transversal de levier de vitesses (14) dans une position stationnaire.

5. Dispositif de verrouillage de levier de vitesses selon la revendication 1, **caractérisé en ce que** le corps de cadre (112) comporte un premier et un second éléments de montage latéraux (126, 120) et des éléments de montage vers l'avant et vers l'arrière (122, 124) formant un cadre rectangulaire,
dans lequel le mécanisme transversal de levier de vitesses (114) est installé à l'intérieur du cadre rectangulaire, le premier élément de montage latéral (126) comporte un bord de rail qui est en forme de « L » et ayant un bord inférieur qui supporte les roues de soutien (136) attachées à un bord latéral du mécanisme transversal de levier de vitesses (114), et
au niveau d'une partie supérieure du corps de cadre (112), se trouve une plaque de cadre (119) dotée de moyens de fixation pour fixer la plaque de cadre (119) sur un bord latéral correspondant pour couvrir la partie supérieure du corps de cadre (112), et
l'un des premier et second éléments de montage latéraux (126, 120) est en prise avec le mécanisme de verrouillage (116) et comporte des trous de goujon (120c) pour recevoir la goupille de verrouillage (150) pour verrouiller le mécanisme de verrouillage (116) dans la position verrouillée.

6. Dispositif de verrouillage de levier de vitesses selon la revendication 1, **caractérisé en ce que** le mécanisme transversal de levier de vitesses (114) est formé à partir de tôle en un corps en forme de « U » (130) ayant des extrémités supérieures fixées à une tige métallique (131),
dans lequel sur les côtés opposés de la tige métallique (131), se trouvent des roues de soutien (136) pour entraîner le mécanisme transversal de levier de vitesses (114) vers l'avant ou vers l'arrière le long d'un bord latéral du corps de cadre (112), et sur une tige métallique (131) du mécanisme transversal de levier de vitesses (114) dans une position où le mécanisme de verrouillage (116) est installé, se trouvent des ouvertures de goupille de verrouillage (131c) dans un nombre correspondant à celui des goupilles de verrouillage (150) sur le goujon de verrouillage conçu dans la position verrouillée pour verrouiller fixement le mécanisme transversal de levier de vitesses (114).

7. Dispositif de verrouillage de levier de vitesses selon la revendication 1, **caractérisé en ce que** le mécanisme transversal de levier de vitesses (214) comprend :
des éléments latéraux (230a, 230b) reliés les uns aux autres par une tige de liaison (231a, 231b), les éléments latéraux étant des tiges métalliques formées au niveau des parois supérieure et inférieure pour former un nombre d'ouvertures concave (233) pour recevoir les roulements à billes (235) utilisés pour supporter le mouvement des éléments latéraux à l'intérieur du corps de cadre (212), et
sur les tiges métalliques du mécanisme transversal de levier de vitesses (214) dans l'installation du mécanisme de verrouillage (216), se trouvent des ouvertures de goupille de verrouillage d'un nombre égal à celui des goupilles de verrouillage sur le goujon de verrouillage dans la position verrouillée pour verrouiller fixement le mécanisme transversal de levier de vitesses (214).

8. Dispositif de verrouillage de levier de vitesses selon la revendication 2, **caractérisé en ce que** sur le mécanisme transversal de levier de vitesses (14), se trouve un mécanisme de positionnement pour assurer un verrouillage correct sur une position d'une ouverture de goupille (34a) sur le mécanisme transversal de levier de vitesses (14), et
l'ouverture de goupille sur un bord latéral du corps de cadre (12) est dans une position appropriée pour recevoir la goupille de verrouillage (50) sur le goujon de verrouillage coulissant dans une position de verrouillage de levier de vitesses.

9. Dispositif de verrouillage de levier de vitesses selon la revendication 1, **caractérisé en ce que** sur les pattes de fixation, se trouvent des cache-vis (68, 70) formés selon une configuration qui correspond à celle des pattes de fixation (64, 66) pour empêcher le retrait des vis de fixation pour fixer les pattes de fixation sur le véhicule.

10. Dispositif de verrouillage de levier de vitesses selon la revendication 9, **caractérisé en ce que** les cache-vis (68, 70) sont fixés à une partie au-dessus des pattes de fixation (64, 66) avec un nombre de goujons (74) et une extrémité du cache-vis est attachée au corps de cadre (12) avec un nombre de vis dans une position où le mécanisme transversal de levier de vitesses coulisse pour couvrir les vis (74) lorsqu'il est dans la position verrouillée.

11. Dispositif de verrouillage de levier de vitesses (300) comprenant:
un corps de cadre (312)
un mécanisme de verrouillage (316) relié à un côté latéral du corps de cadre (312) ; et
un mécanisme transversal de levier de vitesses (314) installé à l'intérieur du corps de cadre, le mécanisme transversal de levier de vitesses (314) ayant une orientation transversale par rapport au levier de vitesses installé à l'intérieur du corps de cadre (312), **caractérisé en ce que**
le corps de cadre présente un premier et un second rails (326, 320) et **en ce que** le mécanisme transversal de levier de vitesses (314) comporte :
une tige métallique (330) courbée de manière à former un cadre rectangulaire qui comporte :
au moins trois côtés (330a, 330e, 330f), une paire de côtés opposés des au moins trois côtés formant une tige transversale de levier de vitesses avant (330e) et une tige transversale de levier de vitesses arrière (330f), et
dans lequel un côté latéral desdits au moins trois côtés s'étendant depuis la tige transversale de levier de vitesses avant (330e) et la tige transversale de levier de vitesses arrière (330f) est relié à un axe en extension (338) en prise avec une roue (336) qui coulisse à l'intérieur du premier rail (336) pour contrôler un mouvement du levier de vitesses sur un côté du corps de cadre (312) tandis que l'autre côté de la tige transversale de levier de vitesses avant (330e) et de la tige transversale de levier de vitesses arrière (330f) est attaché à une tuyauterie coulissante (334) montée sur un axe (337) pour contrôler un mouvement du levier de vitesses à l'intérieur du second rail (320) et comprenant des pattes de fixation (364, 366) reliées au corps de cadre au niveau d'une partie inférieure du corps de cadre (312).

12. Dispositif de verrouillage de levier de vitesses selon la revendication 11, **caractérisé en ce que** le corps de cadre (312) comprend une plaque de cloisonnement avant et une plaque de cloisonnement arrière (322, 324) maintenant les extrémités respectives des premier et second rails (326, 320) pour former un cadre rectangulaire ayant des rails des deux côtés, dans lequel l'une des extrémités latérales des plaques de cloisonnement avant et arrière (322, 324) est positionnée à une extrémité du second rail (320) où un axe (337) doté d'un trou traversant (337a) est attaché aux extrémités du second rail (320).

13. Dispositif de verrouillage de levier de vitesses selon la revendication 12, **caractérisé en ce que** l'axe (337) comprend au moins un trou traversant (337a) pour supporter une extrémité de goujon du mécanisme de verrouillage (316) dans la position verrouillée.

14. Dispositif de verrouillage de levier de vitesses selon la revendication 11, **caractérisé en ce que** le corps de cadre (312) comprend :
un nombre de pattes de fixation (364, 366) moulées selon une forme permettant leur installation à l'intérieur d'un panneau de recouvrement de levier de vitesses d'un véhicule et de trous traversants dans des positions correspondant aux vis d'origine du véhicule pour l'utilisation dans la fixation du dispositif de verrouillage de levier de vitesse au véhicule, et
sur les pattes de fixation, se trouve au moins un goujon s'étendant vers le haut d'une manière correspondant à une gorge de goujon sur les cache-vis (368, 370) des positions correspondantes, les cache-vis ayant une configuration qui concorde avec celle des pattes de fixation (364, 366),
dans lequel les cache-vis (368, 370) couvrent une partie supérieure des pattes de fixation (364, 366) et sont reliés ensemble par le biais du goujon et les vis fixant le dispositif de verrouillage de levier de vitesses (300) au panneau de recouvrement de levier de vitesses sont obstruées par la position des cache-vis lorsque le dispositif de verrouillage de levier de vitesses est dans la position verrouillée.

15. Dispositif de verrouillage de levier de vitesses selon la revendication 11, **caractérisé en ce que** le mécanisme de verrouillage (316) est relié à une partie latérale du corps de cadre (312) et opérationnellement en prise avec l'axe (337), et
dans lequel le mécanisme de verrouillage (316) comprend :
un corps de mécanisme de verrouillage (46),
un mécanisme tournant (60) placé à l'intérieur du corps de mécanisme de verrouillage (46), le mécanisme tournant (60) étant situé à l'intérieur d'un cylindre de mécanisme tournant (56) ayant une goupille de verrouillage (50) s'étendant à partir d'une extrémité du cylindre du mécanisme tournant (56) pour être verrouillée sur un trou traversant (337a) sur l'axe (337) à travers un trou traversant (320a) sur le corps de cadre (312) et un trou (334a) sur la tuyauterie coulissante (334) dans des positions correspondantes, et un axe pivot du mécanisme tournant (60) étant en prise avec le mécanisme du goujon de verrouillage pour empêcher le mécanisme tournant (60) de coulisser vers l'arrière en raison de l'application d'une force du ressort de rappel en prise avec une partie d'extrémité s'étendant depuis le mécanisme tournant (60) pour verrouiller la goupille de verrouillage (50) avec le trou traversant sur l'axe (337) lorsque le dispositif de verrouillage du levier de vitesse est dans une position verrouillée.

16. Dispositif de verrouillage de levier de vitesses selon la revendication 11, **caractérisé en ce que** les éléments de levier de vitesse sur la tige transversale du levier de vitesse avant (330e) et la tige transversale du levier de vitesses arrière (330f) comprennent en outre un premier et un second axes de soutien en extension (330, 330d) s'étendant respectivement à partir de la tige transversale du levier de vitesse avant (330e) et de la tige transversale du levier de vitesses arrière (330f), qui sont insérés respectivement dans les trous traversants sur les plaques de cloisonnement avant et arrière (322, 324) du corps de cadre (312).
